# EUROPÄISCHE PATENTSCHRIFT

(11) **EP 3 218 644 B1**
(45) Veröffentlichungstag und Bekanntmachung des Hinweises auf die Patenterteilung: **25.12.2019**
(21) Anmeldenummer: 15787473.6
(22) Anmeldetag: 29.10.2015
(51) Int. Cl.: F21S 41/176, F21S 41/20, F21S 41/16, F21S 41/141, F21S 41/24, F21S 41/65

(54) **SCHEINWERFER FÜR EIN KRAFTFAHRZEUG**
HEADLAMP FOR A VEHICLE
PHARE POUR VÉHICULE

(30) Priorität: 13.11.2014 DE 102014016835
(43) Veröffentlichungstag der Anmeldung: 20.09.2017
(73) Patentinhaber: Audi AG, 85045 Ingolstadt (DE)
(72) Erfinder: GUT, Carsten, 85051 Ingolstadt (DE); KOCH, Florian, 64732 Bad König (DE)
(74) Vertreter: Thielmann, Frank
(86) Internationale Anmeldenummer: PCT/EP2015/002153
(87) Internationale Veröffentlichungsnummer: WO 2016/074765

(56) Entgegenhaltungen:
- EP-A1- 2 384 934
- EP-A2- 2 639 499
- WO-A1-2013/134805
- DE-A1-102012 013 841
- DE-A1-102013 200 925
- JP-A- 2010 232 044
- US-A1- 2012 008 098
- US-A1- 2014 169 015

## Beschreibung

Die Erfindung betrifft einen Scheinwerfer für ein Kraftfahrzeug mit einer ersten Halbleiterlichtquelle zum Erzeugen einer ersten Strahlung, einer zweiten Halbleiter-Lichtquelle zum Erzeugen einer zweiten Strahlung und einer optischen Koppelvorrichtung zum Koppeln der erzeugten Strahlungen.

Zum Erzeugen eines Lichtstroms, welcher für Scheinwerfer benötigt wird, übersteigt die optische Energie von einzelnen Laserdioden (LD) deutlich. Derzeit existieren Scheinwerfer, welche drei oder vier Laserdioden verwenden, um den benötigten Lichtstrom zu erzeugen. Die Einzelstrahlen der jeweiligen Laserdioden werden dabei über ein Spiegelsystem phasengleich gekoppelt.

Die DE 10 2012 213 547 A1 offenbart eine Beleuchtungseinrichtung für ein Kraftfahrzeug mit einem Lichtleiter zur totalreflektierenden Leitung von Licht entlang eines Paares von gegenüberliegenden Lichtleitungsflächen. Dabei stammt das Licht von zumindest einer Lichtquelle und ist über eine Einkoppelfläche in den Lichtleiter einkoppelbar. Es ist auch eine Austrittsfläche vorgesehen, in der das Licht unter Aufhebung der Totalreflexionsbedingung aus dem Lichtleiter austritt.

Die DE 10 2011 085 385 A1 beschreibt ebenfalls eine Beleuchtungseinrichtung für ein Kraftfahrzeug mit einem Lichtleiter zur totalreflektierenden Leitung von Licht entlang einer Lichtausbreitungsrichtung. Dabei stammt das Licht von zumindest einer Lichtquelle und ist über zumindest eine Einkoppelfläche an einer Stirnseite des Lichtleiters einkoppelbar. Die zumindest eine Lichtquelle ist eine Laserlichtquelle.

Die DE 101 33 869 A1 offenbart eine Leuchtvorrichtung mit einer Platte aus transparentem Material, auf welche eine Anordnung aus punktförmigen elektrolumineszenten Punktelementen aufgebracht ist, mit denen auch Mittel zum Kollimieren eines jeweils austretenden Lichtstrahls verbunden sind. Diese können zum Beispiel aus einer Anordnung von reflektierenden Mikrovorsprüngen bestehen.

Die DE 10 2012 013 841 A1 offenbart einen Kraftfahrzeugscheinwerfer mit einer Lichtquellenanordnung sowie einem einstückigen Körper aus einem transparenten Material mit einem Lichttunnel, welcher eine Lichteintrittsfläche aufweist, über welche Licht aus der Lichtquellenanordnung einkoppelbar ist. Über eine zusätzliche Lichtquelle, welche als LED ausgeführt ist, kann ein weiteres Licht in den transparenten Körper eingekoppelt werden, welches ein Aufblendlicht implementiert.

Die EP 2 639 499 A2 offenbart LED-Modul mit einer ersten Lichtquelle zur Abstrahlung eines ersten Lichts. Das erste Licht strahlt in eine Lichtteintrittsfläche eines Lichtleitelements ein und verläßt dieses über eine Lichtaustrittsfläche. Das Lichtleitelement weist auch eine Seitenfläche auf, über welche ein zweites Licht einer zweiten Lichtquelle in das Lichtleiterelement gelangt. Auch das zweite Licht verläßt das Lichtleitelement über die Lichtaustrittsfläche. Die erste Lichtquelle kann dabei ein Farbkonversionsmittel aufweisen.

Die DE 10 2013 200 A1, D3, offenbart eine Lichtquellenbaueinheit für Kraftfahrzeugscheinwerfer, mit einer Laserlichtquelle, einem Photolumineszenzelement, welches derart ausgebildet ist, dass durch auftreffendes Laserlicht eine Mischlichtverteilung unter Ausnutzung von Photolumineszenz ausstrahlbar ist, und welches derart angeordnet ist, dass das Laserlicht der wenigstens einen Laserlichtquelle auf das Photolumineszenzelement einstrahlbar ist, sowie mit wenigstens einer Leuchtdiode zur Erzeugung einer Ergänzungslichtverteilung, wobei die wenigstens eine Laserlichtquelle, das Photolumineszenzelement und die wenigstens eine Leuchtdiode an einem gemeinsamen Trägerbauteil 26 als Baueinheit fest angeordnet sind.

Die US 2014/0169015 A1 offenbart einen Scheinwerfer für ein Kraftfahrzeug mit einer UV-LED, einer Linse und einem Phosphor. Zwischen dem Phosphor und einer zweiten Linse kann ein optischer Filter angeordnet sein, welcher einen Teil des UV-Lichts ausfiltert.

Der Erfindung liegt die Aufgabe zu Grunde, die Lichtqualität eines Scheinwerfers zu verbessern.

Diese Aufgabe wird von dem Gegenstand des unabhängigen Patentanspruchs gelöst. Vorteilhafte Ausführungsformen ergeben sich aus den abhängigen Patentansprüchen, der Beschreibung und den Figuren.

Ein erfindungsgemäßer Scheinwerfer für ein Kraftfahrzeug hat eine erste Halbleiter-Lichtquelle zum Erzeugen einer ersten Strahlung, eine zweite Halbleiter-Lichtquelle zum Erzeugen einer zweiten Strahlung und eine optische Koppelvorrichtung zum Koppeln der erzeugten Strahlungen. Unter einer Strahlung ist hier und im Folgenden insbesondere eine Lichtstrahlung zu verstehen, insbesondere mit einem Spektrum im sichtbaren Bereich. Bei den beiden Halbleiter-Lichtquellen handelt es sich insbesondere um technologisch verschiedene Halbleiter-Lichtquellen. Sie können auf unterschiedlichen technischen Wirkprinzipien beruhen und/oder unterschiedliche technische Merkmale aufweisen. Die optische Koppelvorrichtung verfügt über eine erste Einkoppelfläche zum Einkoppeln der von der ersten Halbleiter-Lichtquelle erzeugten ersten Strahlung sowie über eine zweite Einkoppelfläche zum Einkoppeln der von der zweiten Halbleiter-Lichtquelle erzeugten zweiten Strahlung. In der Koppelvorrichtung werden die Strahlungen zu einer Gesamtstrahlung gekoppelt. Die Koppelvorrichtung umfasst insbesondere ferner eine Auskoppelfläche, an welcher die Gesamtstrahlung austritt. Der Scheinwerfer kann auch mehrere erste und/oder mehrere zweite Halbleiter-Lichtquellen umfassen.

Um die Qualität des Scheinwerfers zu verbessern, ist ein Konverterelement in einem optischen Weg zwischen der ersten Halbleiter-Lichtquelle und der ersten Einkoppelfläche angeordnet, zum Konvertieren einer von der ersten Halbleiter-Lichtquelle ausgestrahlten Primärstrahlung in die erzeugte erste Strahlung. Als optischer Weg kann hier ein Ausbreitungspfad eines Lichtstrahls der Strahlung verstanden sein. Das Konverterelement ist hier in einem optischen Weg der Primärstrahlung angeordnet. Insbesondere ist hier in einem optischen Weg zwischen der zweiten Halbleiter-Lichtquelle und der zweiten Einkoppelfläche der optischen Koppelvorrichtung kein Konverterelement angeordnet, sodass die von der zweiten Halbleiter-Lichtquelle erzeugte zweite Strahlung ohne ein vorhergehendes Konvertieren einer Wellenlänge auf die zweite Einkoppelfläche trifft. Das Konverterelement konvertiert die Primärstrahlung, welche eine erste Wellenlängenverteilung aufweist, in die erzeugte erste Strahlung mit einer anderen Wellenlängenverteilung. Die Halbleiter-Lichtquellen können aneinander angepasst sein, so dass durch ein phasengleiches Pulsen der Halbleiter-Lichtquellen ein Auslöschen der einzelnen von den jeweiligen Halbleiter-Lichtquellen emittierten Einzelwellen der jeweiligen Strahlungen in der Koppelvorrichtung vermieden ist. Das hat zu Einen den Vorteil, dass die an der Auskoppelfläche der optischen Koppelvorrichtung austretende Gesamtstrahlung einen einzigen Ursprung hat. Es wird eine echte Strahlkombinierung (sog. beam combining) erreicht, so dass in Folge eine hohe geometrische Präzision gerade bei einem dynamischen Ablenken der Gesamtstrahlung, wie es in strahlgeführten Scheinwerfern üblich ist, erreicht ist. Zum anderen sind in der Gesamtstrahlung die Spektren der ersten und der zweiten Strahlung kombiniert, so dass auch die spektrale Verteilung der Gesamtstrahlung über die unterschiedlichen Eigenschaften der einzelnen Strahlungen besser einstellbar und an gewünschte Gesamteigenschaften angepasst werden kann.

In einer vorteilhaften Ausführungsform ist vorgesehen, dass die Koppelvorrichtung einen Lichtwellenleiter, insbesondere eine Mulitmode-Faser, umfasst. Der Lichtwellenleiter hat hier insbesondere einen Durchmesser zwischen 100 µm und 2 mm. Der Lichtwellenleiter kann mehrere Einzelstränge aufweisen, welche dann zum Vermeiden einer destruktiven Interferenz der gekoppelten Strahlungen in ihrer Länge aneinander angepasst sind. Durch den Lichtwellenleiter können alle Wellenlängen im sichtbaren Strahlungsbereich propagiert werden. Das hat den Vorteil, dass auf einfache Weise die erste und zweite Strahlung, welche Licht oder Strahlungen unterschiedlicher Wellenlängen umfassen können, kombiniert werden. Überdies eignen sich Lichtwellenleiter als Koppelvorrichtung in einem Kraftfahrzeug besonders, da sie im Gegensatz zu beispielsweise Spiegeltreppen robust sind und flexibel und raumsparend verlegt werden können.

In einer bevorzugten Ausführungsform ist vorgesehen, dass die erste Halbleiter-Lichtquelle eine Laserdiode umfasst. Diese kann eine monochromatische Primärstrahlung, welche durch das Konverterelement in die erste Strahlung konvertiert wird, ausstrahlen. Das hat den Vorteil, dass eine hohe Leuchtdichte und eine hohe Lichteffizienz bereitgestellt ist.

Erfindungsgemäß ist zwischen dem Konverterelement und der ersten Einkoppelfläche ein optisches Filterelement angeordnet, welches auf die Wellenlänge der Primärstrahlung der ersten Halbleiter-Lichtquelle abgestimmt ist. Durch das optische Filterelement kann, gerade wenn es sich bei der Primärstrahlung um eine monochromatische Primärstrahlung handelt, diese effizient und vollständig ausgefiltert werden. Ein Einkoppeln der Primärstrahlung in die optische Koppelvorrichtung kann damit unterbunden werden. Das hat den Vorteil, dass gerade wenn es sich bei der Primärstrahlung um eine Strahlung oder ein Licht mit einer hohen Intensität handelt, wie dies beispielsweise bei einer als Laserdiode ausgeführten ersten Halbleiter-Lichtquelle der Fall ist, diese Strahlung nicht in eine Umgebung des Scheinwerfers austreten kann. Dies ist vor allem bei einer Beschädigung des Konverterelements, wie beispielsweise einem Bruch, vorteilhaft, da in diesem Fall sonst die Primärstrahlung mit der vollen Intensität in die Koppelvorrichtung eingespeist würde und somit auch die resultierende Gesamtstrahlung in einer Umgebung des Scheinwerfers eine Gefährdung darstellen würde. Auch Folgen einer Alterung des Konverterelements können so abgefangen werden: Erhöht sich nämlich in der erzeugten ersten Strahlung der Licht- oder Strahlungsanteil im Wellenlängenbereich der Primärstrahlung, so wird dieser ausgefiltert. Beide Fehlerquellen sind also durch das Filterelement abgesichert. Personen in der Umgebung werden durch den Scheinwerfer nicht gefährdet, er ist augensicher. Eine zusätzliche, üblicherweise erforderliche Strahlenfalle kann eingespart werden.

In einer weiteren Ausführungsform ist vorgesehen, dass die von der zweiten Halbleiter-Lichtquelle erzeugte zweite Strahlung zumindest im Wesentlichen die gleiche Wellenlänge hat, wie die Primärstrahlung der ersten Halbleiter-Lichtquelle. Das hat den Vorteil, dass in der Gesamtstrahlung eine spektrale Lücke, wie sie auf Grund des optischen Filterelements durch ein Ausfiltern der Primärstrahlung aus der ersten Strahlung entsteht, ausgeglichen werden kann. Damit ist eine hohe Betriebssicherheit mit einer verbesserten optischen Qualität des Scheinwerfers kombiniert.

In einer bevorzugten Ausführungsform ist vorgesehen, dass die Strahlungsleistung und/oder die Strahlungsintensität der zweiten Halbleiter-Lichtquelle in dem Wellenlängenbereich der Primärstrahlung der ersten Halbleiter-Lichtquelle geringer ist als die Strahlungsleistung und/oder der Strahlungsintensität der ersten Halbleiter-Lichtquelle in dem Wellenbereich der Primärstrahlung. Das hat den Vorteil, dass so ein Spektrum der Gesamtstrahlung besonders gut eingestellt werden kann. Insbesondere kann bei einer Kombination mit einer der in den beiden letzten Absätzen genannten Ausführungsformen so sichergestellt sein, dass eine der Gesamtstrahlung zur Kompensation einer spektralen Lücke zugeführte Strahlung ungefährlich ist beziehungsweise nicht blendet.

In einer weiteren Ausführungsform ist vorgesehen, dass die erzeugte zweite Strahlung eine Wellenlängenverteilung hat, welche von der Wellenlängenverteilung der ersten erzeugten Strahlung verschieden ist und insbesondere ein Spektrum zwischen 450nm und 730nm abdeckt. Das hat den Vorteil, dass Charakteristiken der Wellenlängenverteilung der ersten erzeugten Strahlung kompensiert oder ergänzt werden, so dass die Wellenlängenverteilung der Gesamtstrahlung optimiert ist und somit der Scheinwerfer eine verbesserte Lichtqualität aufweist.

In einer bevorzugten Ausführungsform ist vorgesehen, dass die zweite Halbleiter-Lichtquelle eine Leuchtdiode umfasst. Das hat den Vorteil, dass die zweite Strahlung günstig und energieeffizient erzeugt werden kann. Durch die Vielzahl an unterschiedlichen erhältlichen Leuchtdioden kann so auch die spektrale Wellenlängenverteilung die Gesamtstrahlung in einfacher Weise zu einer vorgegebenen Wellenlängenverteilung modifiziert oder ergänzt werden. Gerade wenn die erste Halbleiter-Lichtquelle eine Laserdiode umfasst, können so die Vorteile der beiden unterschiedlichen Halbleitertechnologien kombiniert werden. Unvorteilhafte Charakteristiken, welche jede einzelne Halbleitertechnologie für sich möglicherweise mit sich bringt, können so durch die jeweils andere Halbleitertechnologie ausgeglichen werden.

In einer weiteren Ausführungsform ist vorgesehen, dass zwischen der ersten Einkoppelfläche und dem Konverterelement und/oder zwischen der zweiten Einkoppelfläche und der zweiten Halbleiter-Lichtquelle ein jeweiliges optisches Kollimationselement angeordnet ist zum Kollimieren der jeweiligen erzeugten Strahlungen vor deren Koppeln in der Koppelvorrichtung. Das hat den Vorteil, dass eine Etendue der jeweiligen erzeugten Strahlungen eingestellt beziehungsweise verringert werden kann, was für ein Einkoppeln in die Koppelvorrichtung und ein späteres dynamisches Ablenken des Gesamtstrahlung günstig ist.

Die Erfindung betrifft auch ein Kraftfahrzeug mit einem Scheinwerfer nach einer der beschriebenen Ausführungsformen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine schematische Darstellung einer beispielhaften Ausführungsform eines Scheinwerfers;
- Fig.2: in der Ausführungsform nach Fig. 1 auftretende Wellenlängenverteilungen;
- Fig. 3: eine schematische Darstellung einer beispielhaften weiteren Ausführungsform eines Scheinwerfers; und
- Fig. 4: in der Ausführungsform nach Fig. 3 auftretende Wellenlängenverteilungen;

In den Figuren werden gleiche oder funktionsgleiche Elemente mit den gleichen Bezugszeichen versehen.

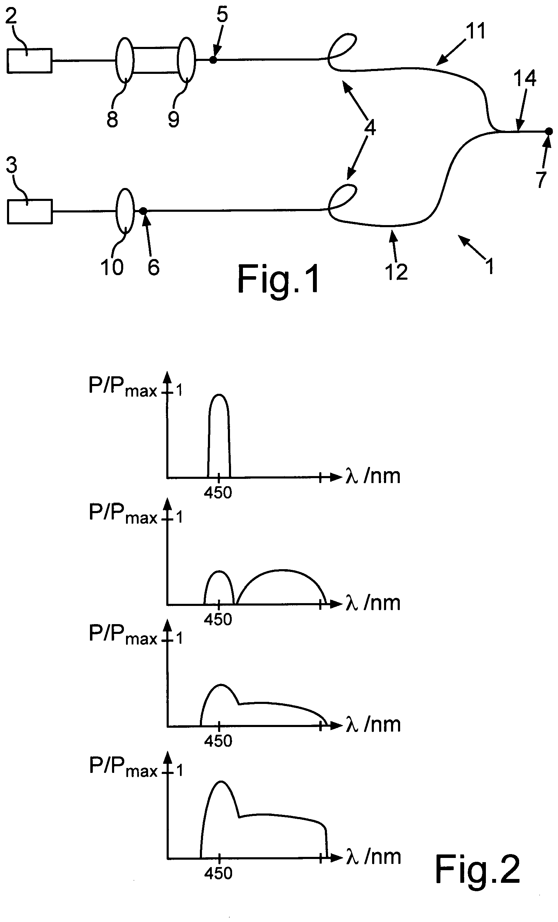

Fig. 1 zeigt eine schematische Darstellung einer beispielhaften Ausführungsform eines Scheinwerfers. Der Scheinwerfer 1 umfasst hier eine erste Halbleiter-Lichtquelle 2 und eine zweite Halbleiter-Lichtquelle 3. Die erste Halbleiter-Lichtquelle 2 ist vorliegend als Laserdiode, beispielsweise mit einer Leistung von 1,6 W, ausgelegt und emittiert eine monochromatische Primärstrahlung, vorliegend bei einer Wellenlänge von 450nm. Die zweite Halbleiter-Lichtquelle 3 ist im gezeigten Beispiels als Leuchtdiode ausgeführt und strahlt hier entsprechend einer vorgegebnen Wellenlängenverteilung, welche in Fig. 2 dargestellt ist, Strahlung in einem Spektralbereich zwischen 450nm und 730nm ab. Die Intensität der zweiten Halbleiter-Lichtquelle 3 beträgt hier beispielsweise 100 Lumen. Der Scheinwerfer 1 umfasst auch eine optische Koppelvorrichtung 4, welche in diesem Beispiel einen ersten Einzelstrang 11 mit einer ersten Einkoppelfläche 5 und einen zweiten Einzelstrang 12 mit einer zweiten Einkoppelfläche 6 umfasst. Die beiden Einzelstränge 11, 12 werden vorliegend zu einem Gesamtstrang 14 zusammengeführt. Die optische Koppelvorrichtung 4 umfasst an dem Gesamtstrang 14 auch eine Auskoppelfläche 7, an welcher eine Gesamtstrahlung, welche durch ein Koppeln der in der ersten und zweiten Einkoppelfläche 5, 6 in die Koppelvorrichtung 4 eingekoppelten Strahlungen erzeugt wird. In einem optischen Weg zwischen der ersten Halbleiter-Lichtquelle 2 und der ersten Einkoppelfläche 5 ist vorliegend ein Konverterelement 8 angeordnet, sowie ein Kollimationselement 9. Das Kollimationselement 9 ist dabei von der Halbleiter-Lichtquelle 2 aus betrachtet hinter dem Konverterelement 8 angeordnet. Zwischen der zweiten Halbleiter-Lichtquelle 3 und der zweiten Einkoppelfläche 6 ist ein weiteres Kollimationselement 10 angeordnet. Das Konverterelement 8 ist vorliegend als fluoreszierender Konverter ausgeführt. Die beiden Kollimationselemente 9, 10 sind als Sammellinsen ausgeführt.

Eine von der ersten Halbleiter-Lichtquelle 2 abgestrahlte monochromatische Primärstrahlung trifft somit auf das Konverterelement 8. Dieses konvertiert die monochromatische Primärstrahlung, welches vorliegend eine Wellenlänge von beispielsweise 450nm aufweist, in eine weiße erste Strahlung, welche ein breites Spektrum, eine breite Wellenlängenverteilung, im sichtbaren Bereich aufweist. Diese erste Strahlung besitzt im Gegensatz zu der Primärstrahlung der ersten Halbleiter-Lichtquelle 2 eine große Etendue, da das Konverterelement 8 die erste Strahlung lambert'sch über eine im Vergleich zu einer emittierenden Oberfläche der ersten Halbleiter-Lichtquelle 3 große Fläche abstrahlt. Über das hier möglichst nah an dem Konverterelement 8 angeordnete Kollimationselement 9 wird die abgestrahlte erste Strahlung des Konverterelements 8 kollimiert. Dabei wird die ursprüngliche Etendue nicht wiederhergestellt. Die kollimierte erste Strahlung wird im Anschluss über die erste Einkoppelfläche 5 in die optische Koppelvorrichtung 4, welche vorliegend als Lichtwellenleiter ausgeführt ist, eingespeist. Der Lichtwellenleiter ist hier als Multimode-Faser ausgelegt, so dass in diesem sämtliche Wellenlängen propagiert werden.

Für die zweite Halbleiter-Lichtquelle 3 stehen verschiedene Leuchtdioden zur Verfügung, welche jeweils eine zweites Strahlung mit unterschiedlichen charakteristischen Wellenlängenverteilungen erzeugen. Hier kann ein fluoreszierender Konverter direkt in einem Gehäuse der Leuchtdiode untergebracht sein. Die emittierte zweite Strahlung der zweiten Halbleiter-Lichtquelle 3 wird über das weitere Kollimationselement 10, vorliegend die Sammellinse, kollimiert und über die zweite Einkoppelfläche 6 direkt in die optische Koppelvorrichtung 4 eingespeist. Im gezeigten Beispiel erfolgt ein Koppeln der jeweils in die Koppelvorrichtung 4 eingespeisten ersten und zweiten Strahlungen über ein Vereinen von jeweiligen Einzelsträngen 11, 12 des Lichtwellenleiters in einer Koppelstelle zu einem Gesamtstrang 14. Es wird somit also im gezeigten Beispiel die Strahlung von einer Leuchtdiode und einer Laserdiode zu einer Gesamtstrahlung gekoppelt, welche mit der Auskoppelstelle 7 der Koppelvorrichtung 4 als einheitlichem Ursprung in dem Scheinwerfer 1 verwendet werden kann. Vorliegen sind die Halbleiter-Lichtquellen auf ein phasengleiches Pulsen eingestellt und die beiden Einzelstränge 11, 12 der Koppelvorrichtung 4 weisen eine identische Länge auf, sodass die Einzelwellen sich nicht auslöschen.

In Fig. 2 sind vier spektrale Wellenlängenverteilungen dargestellt, welche in der beispielhaften Ausführungsform eines Scheinwerfers nach Fig. 1 auftreten. Aufgetragen ist jeweils eine normierte Strahlungsleistung P/Pₘₐₓ über einer Wellenlänge λ.

Der oberste Graph stellt eine Wellenlängenverteilung der von der ersten Halbleiter-Lichtquelle 2 abgestrahlten Primärstrahlung dar. Dieses ist, da es sich bei der ersten Halbleiter-Lichtquelle 2 vorliegend um eine Laserdiode handelt, ein monochromatisches Spektrum mit einer engen Gauß'schen Verteilung um eine vorgegebene Wellenlänge, vorliegend 450nm. Der Peak weist in diesem Beispiel eine Breite von 5nm auf und erreicht die maximale Strahlungsleistung Pₘₐₓ.

Der zweite Graph von oben stellt eine Wellenlängenverteilung der von der ersten Halbleiter-Lichtquelle 2 erzeugten ersten Strahlung dar. Diese weist im gezeigten Beispiel immer noch ein schmales Maximum bei einer Wellenlänge von 450nm auf, welches dem Maximum in dem obersten Graphen entspricht. Es ist jedoch erheblich schwächer ausgeprägt und erreicht in etwa die Hälfte der maximalen Strahlungsleistung Pₘₐₓ. Ein zweites, wesentlich breiteres Maximum findet sich jedoch im höheren Wellenlängebereich. Dieser Teil der Wellenlängenverteilung ist in dem Konverterelement 8 durch das Bestrahlen mit der Primärstrahlung und das Konvertieren derselben erzeugt worden. Zwischen den beiden Maxima ist im gezeigten Beispiel eine spektrale Lücke vorhanden, die beiden Maxima sind also im gezeigten Beispiel voneinander getrennt.

Der dritte Graph von oben stellt eine Wellenlängenverteilung der von der zweiten Halbleiter-Lichtquelle 3 erzeugten zweiten Strahlung dar. Auch diese weist im Bereich von 450nm ein Maximum auf, welches allerdings deutlich breiter als das Maximum der Primärstrahlung ist. Ausgehend von diesem Maximum bei 450nm fällt die Wellenlängenverteilung zu höheren Wellenlängenbereichen hin stetig ab. Die größte emittierte Wellenlänge der zweiten Halbleiter-Lichtquelle 3 liegt in dem gezeigten Beispiel etwa bei 730nm.

In dem vierten Graphen von oben ist schließlich eine Wellenlängenverteilung der resultierenden Gesamtstrahlung, welche durch ein Koppeln der ersten und der zweiten Strahlung erzeugt ist, dargestellt. Diese Wellenlängenverteilung steigt steil auf ein Maximum bei 450nm an, um darauffolgend ebenso steil, ähnlich der Wellenlängenverteilung der zweiten Strahlung, abzufallen und sodann zu größeren Wellenlängen in der normierten Strahlungsleistung P/Pₘₐₓ annähernd konstant zu verbleiben und oberhalb von 730nm abrupt abzufallen. Es wird vorliegend also durch ein Kombinieren der ersten und der zweiten Strahlung eine besonders gleichmäßige spektrale Wellenlängenverteilung der Gesamtstrahlung an der Auskoppelfläche 7 realisiert.

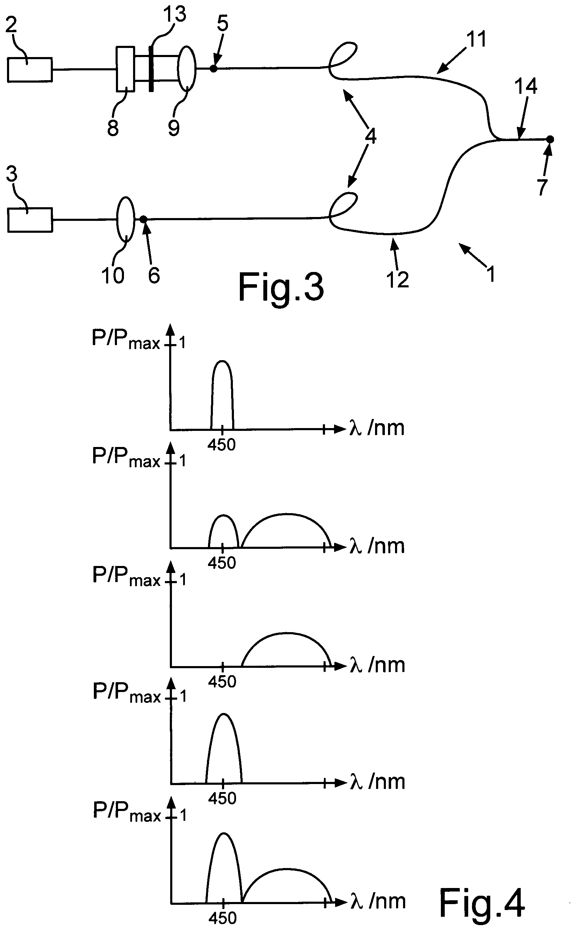

In Fig. 3 ist eine weitere beispielhafte Ausführungsform eines Scheinwerfers 1 schematisch dargestellt. Der Aufbau entspricht hier weitgehend dem in Fig. 1 gezeigtem Ausführungsbeispiel, allerdings ist zwischen dem Konverterelement 8 und dem Kollimationselement 9 ein optisches Filterelement 13 angeordnet. Das optische Filterelement 13 kann auch direkt an dem Konverterelement 8 angeordnet sein. Das optische Filterelement 13 ist an eine Wellenlänge der Primärstrahlung angepasst, um sie auszufiltern beziehungsweise zu absorbieren oder zu reflektieren. Im gezeigten Beispiel ist entsprechend das optische Filterelement 13 stark bandbegrenzt und filtert ausschließlich Strahlung der Wellenlänge der Primärstrahlung, vorliegend also Strahlung mit einer Wellenlänge von 450nm aus. Von der in Fig. 1 gezeigten Ausführungsform unterscheidet sich die vorliegende Ausführungsform weiterhin dadurch, dass die zweite Halbleiter-Lichtquelle 3, welche ebenfalls als Leuchtdiode ausgeführt ist, nicht mehr weißes Licht oder weiße Strahlung ausstrahlt, sondern die zweite Strahlung die gleiche Wellenlänge aufweist wie die von der ersten Halbleiter-Lichtquelle 2 ausgestrahlte Primärstrahlung. Vorliegend emittiert die zweite Halbleiter-Lichtquelle 3 also eine zweite Strahlung mit der Wellenlänge von 450nm, insbesondere ausschließlich mit dieser Wellenlänge.

Wie in dem oben beschriebenen Ausführungsbeispiel wird die von der ersten Halbleiter-Lichtquelle 2 abgestrahlte monochromatische Primärstrahlung, vorliegend mit der Wellenlänge von 450nm, auf das Konverterelement 8 gestrahlt, welche die monochromatische Primärstrahlung in eine weiße erstes Strahlung mit einer breiten Wellenlängenverteilung konvertiert. Aus der ersten Strahlung wird durch das optische Filterelement 13 nun die Wellenlänge der Primärstrahlung, vorliegende 450nm, ausgefiltert. Von der ersten Halbleiter-Lichtquelle 2 aus betrachtet hinter dem optischen Filterelement 13 hat die erste Strahlung nun ein eingeschränktes Spektrum. Dieses eingeschränkte Spektrum ist in Fig. 4 in dem dritten Graphen von oben dargestellt. Die spektrale Wellenlängenverteilung der ersten Strahlung nach dem Filterelement 13 deckt nun nicht mehr wie in dem ersten Ausführungsbeispiel von Fig. 1 einen Spektralbereich von 450nm bis 730nm ab, sondern lediglich nur noch von ca. 460nm bis 730nm. Diese erste Strahlung mit der eingeschränkten Wellenlängenverteilung wird nun, wie in oben für Fig. 1 für die erste Strahlung beschrieben, durch ein als Sammellinse ausgeführtes Kollimationselement 9 kollimiert. Auch dabei wird die ursprüngliche Etendue nicht wieder hergestellt. Die kollimierte erste Strahlung wird dann wie oben über die erste Einkoppelfläche 5 in die optische Koppelvorrichtung 4 eingespeist. Auch die zweite Strahlung der zweiten Halbleiter-Lichtquelle 3 wird nach einem Kollimieren durch das weitere Kollimationselement 6 über die zweite Einkoppelfläche 6 in die optische Koppelvorrichtung 4, welche vorliegend wieder als Lichtwellenleiter ausgeführt ist, eingespeist. Wie oben wird also die erste Strahlung der Laserdiode und die zweite Strahlung der Leuchtdiode in der Koppelvorrichtung 4 zu einer Gesamtstrahlung gekoppelt. Durch das Koppeln der ersten Strahlung mit der, hier blauen, zweiten Strahlung der zweiten Halbleiter-Lichtquelle 3 wird der durch das Filterelement 13 ausgefilterte und somit in der ersten Strahlung nach dem Konverterelement 18 fehlende, hier blaue, Anteil der ersten Strahlung in der Gesamtstrahlung ausgeglichen. Die Wellenlängenverteilung der Gesamtstrahlung hat als Folge keine Lücke im Wellenlängenbereich der Primärstrahlung.

In Fig. 4 sind fünf spektrale Wellenlängenverteilungen schematisch dargestellt, welche in der beispielhaften Ausführungsform eines Scheinwerfers nach Fig. 3 auftreten. Aufgetragen ist wie in Fig. 2 jeweils eine normierte Strahlungsleistung P/Pₘₐₓ über einer Wellenlänge λ.

Der erste Graph von oben stellt hier die Wellenlängenverteilung des von der ersten Halbleiter-Lichtquelle 2 emittierten Primärstrahlung dar. Da es sich auch in Fig. 3 bei der Halbleiter-Lichtquelle 2 um eine Laserdiode mit einer Wellenlänge von 450nm handelt, ist der Graph zum obersten Graphen von Fig. 2 identisch.

Der zweite Graph von oben stellt die Wellenlängenverteilung der ersten Strahlung unmittelbar nach dem Konverterelement 8, aber vor dem optischen Filterelement 13, dar. Die Wellenlängenverteilung ist identisch zu der im zweiten Graphen von oben von Fig. 2, mit einem ersten Maximum bei 450nm und einem zweiten, wesentlich weiteren Maximum in einem höheren Wellenlängenbereich.

Der dritte Graph von oben stellt die Wellenlängenverteilung der ersten Strahlung nach dem Durchlaufen des Filterelements 13 dar. Im Vergleich zu der in dem zweiten Graphen von oben dargestellten Wellenlängenverteilung, ist das erste Maximum bei 450nm nunmehr vollständig ausgefiltert, jedoch das zweite, breitere und weniger ausgeprägte Maximum in dem höheren Wellenlängenbereich unverändert vorhanden.

Der vierte Graph zeigt schließlich die Wellenlängenverteilung der von der zweiten Halbleiter-Lichtquelle 3 erzeugten zweiten Strahlung. Diese ist vorliegend ebenfalls eine monochromatische Strahlung, hier mit einer Wellenlänge von 450nm. Es weist jedoch im Vergleich zu der im ersten Graphen gezeigten Wellenlängenverteilung ein deutlich bereites Maximum auf, da eine Leuchtdiode breitbandigere Strahlung als eine Laserdiode erzeugt.

Der fünfte Graph von oben stellt schließlich die Wellenlängenverteilung der Gesamtstrahlung an einer Auskoppelfläche 7 dar und entspricht dahingehend dem vierten Graphen von oben in Fig. 2. Die gezeigte Wellenlängenverteilung unterscheidet sich jedoch deutlich. Sie setzt sich zusammen aus dem in dem vierten Graphen von oben gezeigten breiten Maximum um 450nm sowie dem in dem dritten Graphen gezeigten breiten Maximum in dem höheren Wellenlängenbereich. Der von der Gesamtstrahlung abgedeckte Wellenlängenbereich erstreckt sich somit von rund 450nm bis 730nm und weist zwei Maxima auf. Das Maximum bei 450nm ist hier stärker ausgeprägt als das Maximum in dem höheren Wellenlängenbereich und auch schmaler. Es ist jedoch deutlich breiter als das Maximum der ersten Halbleiter-Lichtquelle 2 bei 450nm und weist überdies eine geringere normierte Strahlungsleistung P/Pₘₐₓ auf, sodass der Scheinwerfer 1 (Fig. 3) augensicher ist.

## Patentansprüche

1. Scheinwerfer (1) für ein Kraftfahrzeug, mit
- einer ersten Halbleiter-Lichtquelle (2) zum Erzeugen einer ersten Strahlung;
- einer zweiten Halbleiter-Lichtquelle (3) zum Erzeugen einer zweiten Strahlung; und
- einer optischen Koppelvorrichtung (4) zum Koppeln der erzeugten Strahlungen, welche eine erste und eine zweite Einkoppelfläche (5, 6) umfasst, mit der ersten Einkoppelfläche (5) zum Einkoppeln der von der ersten Halbleiter-Lichtquelle (2) erzeugten ersten Strahlung und der zweiten Einkoppelfläche (6) zum Einkoppeln der von der zweiten Halbleiter-Lichtquelle (3) erzeugten zweiten Strahlung, wobei
- ein Konverterelement (8) in einem optischen Weg zwischen der ersten Halbleiter-Lichtquelle (2) und der ersten Einkoppelfläche (5) angeordnet ist zum Konvertieren einer von der ersten Halbleiter-Lichtquelle (2) ausgestrahlten Primärstrahlung in die erzeugte erste Strahlung,
**dadurch gekennzeichnet, dass**
zwischen dem Konverterelement (8) und der ersten Einkoppelfläche (5) ein optisches Filterelement (13) angeordnet ist, welches auf die Wellenlänge der Primärstrahlung abgestimmt ist, um diese auszufiltern oder zu absorbieren oder zu reflektieren, wobei die von der zweiten Halbleiter-Lichtquelle (3) erzeugte zweite Strahlung zumindest im Wesentlichen die gleiche Wellenlänge hat, wie die Primärstrahlung der ersten Halbleiter-Lichtquelle (2).

2. Scheinwerfer (1) nach Anspruch 1,
**dadurch gekennzeichnet, dass**
die Koppelvorrichtung (4) einen Lichtwellenleiter, insbesondere eine Multimodefaser, umfasst.

3. Scheinwerfer (1) nach einem der vorhergehenden Ansprüche,
**dadurch gekennzeichnet, dass**
die erste Halbleiter-Lichtquelle (2) eine Laserdiode umfasst.

4. Scheinwerfer (1) nach einem der vorhergehenden Ansprüche,
**dadurch gekennzeichnet, dass**
das optische Filterelement (13) die Primärstrahlung vollständig ausfiltert.

5. Scheinwerfer (1) nach einem der vorhergehenden Ansprüche,
**dadurch gekennzeichnet, dass**
die Strahlungsleistung und/oder die Strahlungsintensität der zweiten Halbleiter-Lichtquelle (3) in dem Wellenlängenbereich der Primärstrahlung geringer ist als die Strahlungsleistung und/oder die Strahlungsintensität der ersten Halbleiter-Lichtquelle (2) in dem Wellenlängenbereich der Primärstrahlung.

6. Scheinwerfer (1) nach einem der vorhergehenden Ansprüche,
**dadurch gekennzeichnet, dass**
die erzeugte zweite Strahlung eine Wellenlängenverteilung hat, welche von der Wellenlängenverteilung der ersten erzeugten Strahlung verschieden ist, und insbesondere ein Spektrum zwischen 450nm und 730nm abdeckt.

7. Scheinwerfer (1) nach einem der vorhergehenden Ansprüche,
**dadurch gekennzeichnet, dass**
die zweite Halbleiter-Lichtquelle (3) eine Leuchtdiode umfasst.

8. Scheinwerfer (1) nach einem der vorhergehenden Ansprüche,
**dadurch gekennzeichnet, dass**
zwischen der ersten Einkoppelfläche (5) und dem Konverterelement (8) und/oder zwischen der zweiten Einkoppelfläche (6) und der zweiten Halbleiter-Lichtquelle (3) ein jeweiliges optisches Kollimationselement (9, 10) angeordnet ist zum Kollimieren der jeweiligen erzeugten Strahlungen vor deren Koppeln in der Koppelvorrichtung (4).

9. Kraftfahrzeug mit einem Scheinwerfer (1) nach einem der vorhergehenden Ansprüche.

## Claims

1. Headlight (1) for a motor vehicle, having
- a first semiconductor light source (2) for generating a first ray;
- a second semiconductor light source (3) for generating a second ray; and
- an optical coupling device (4) for coupling the generated rays, which optical coupling device comprises a first and second coupling face (5, 6), with the first coupling face (5) for coupling the first ray generated by the first semiconductor light source (2) and the second coupling face (6) for coupling the second ray generated by the second semiconductor light source (3), wherein
- a converter element (8) is arranged in an optical path between the first semiconductor light source (2) and the first coupling face (5) for converting a primary ray emitted by the first semiconductor light source (2) into the generated first ray,
**characterised in that**
an optical filter element (13) is arranged between the converter element (8) and the first coupling face (5), which optical filter element is matched to the wavelength of the primary ray, in order to filter out or absorb or reflect said ray, wherein the second ray generated by the second semiconductor light source (3) has at least substantially the same wavelength as the primary ray of the first semiconductor light source (2).

2. Headlight (1) according to claim 1,
**characterised in that**
the coupling device (4) comprises an optical waveguide, more particularly a multimode fibre.

3. Headlight (1) according to any one of the preceding claims,
**characterised in that**
the first semiconductor light source (2) comprises a laser diode.

4. Headlight (1) according to any one of the preceding claims,
**characterised in that**
the optical filter element (13) filters out the primary ray completely.

5. Headlight (1) according to any one of the preceding claims,
**characterised in that**
the radiation power and/or the radiation intensity of the second semiconductor light source (3) in the wavelength range of the primary ray is smaller than the radiation power and/or the radiation intensity of the first semiconductor light source (2) in the wavelength range of the primary ray.

6. Headlight (1) according to any one of the preceding claims,
**characterised in that**
the generated second ray has a wavelength distribution that is different from the wavelength distribution of the first generated ray, and more particularly covers a spectrum between 450 nm and 730 nm.

7. Headlight (1) according to any one of the preceding claims,
**characterised in that**
the second semiconductor light source (3) comprises a light-emitting diode.

8. Headlight (1) according to any one of the preceding claims,
**characterised in that**
a respective optical collimating element (9, 10) is arranged between the first coupling face (5) and the converter element (8) and/or between the second coupling face (6) and the second semiconductor light source (3), to collimate the respective generated rays before they are coupled in the coupling device (4).

9. Motor vehicle having a headlight (1) according to any one of the preceding claims.

## Revendications

1. Phare (1) pour un véhicule automobile, avec
- une première source de lumière à semi-conducteur (2) pour la génération d'un premier rayonnement ;
- une deuxième source de lumière à semi-conducteur (3) pour la génération d'un deuxième rayonnement ; et
- un dispositif de couplage optique (4) pour le couplage des rayonnements générés, lequel comprend une première et une deuxième surface de couplage (5, 6), avec la première surface de couplage (5) pour le couplage du premier rayonnement généré par la première source de lumière à semi-conducteur (2) et la deuxième surface de couplage (6) pour le couplage du deuxième rayonnement généré par la deuxième source de lumière à semi-conducteur (3), dans lequel
- un élément de conversion (8) est agencé dans un trajet optique entre la première source de lumière à semi-conducteur (2) et la première surface de couplage (5) pour la conversion d'un rayonnement primaire émis par la première source de lumière à semi-conducteur (2) dans le premier rayonnement généré,
**caractérisé en ce que**
un élément de filtration optique (13), lequel est accordé sur la longueur d'onde du rayonnement primaire pour le filtrer ou l'absorber ou le réfléchir, est agencé entre l'élément de conversion (8) et la première surface de couplage (5), dans lequel le deuxième rayonnement généré par la deuxième source de lumière à semi-conducteur (3) a au moins sensiblement la même longueur d'onde que le rayonnement primaire de la première source de lumière à semi-conducteur (2).

2. Phare (1) selon la revendication 1,
**caractérisé en ce que**
le dispositif de couplage (4) comprend un conducteur optique, en particulier une fibre multimode.

3. Phare (1) selon l'une quelconque des revendications précédentes,
**caractérisé en ce que**
la première source de lumière à semi-conducteur (2) comprend une diode laser.

4. Phare (1) selon l'une quelconque des revendications précédentes,
**caractérisé en ce que**
l'élément de filtration optique (13) filtre complètement le rayonnement primaire.

5. Phare (1) selon l'une quelconque des revendications précédentes,
**caractérisé en ce que**
la puissance de rayonnement et/ou l'intensité de rayonnement de la deuxième source de lumière à semi-conducteur (3) dans la plage de longueur d'onde du rayonnement primaire est inférieure à la puissance de rayonnement et/ou à l'intensité de rayonnement de la première source de lumière à semi-conducteur (2) dans la plage de longueur d'onde du rayonnement primaire.

6. Phare (1) selon l'une quelconque des revendications précédentes,
**caractérisé en ce que**
le deuxième rayonnement généré a une distribution de longueur d'onde, laquelle est différente de la distribution de longueur d'onde du premier rayonnement généré, et couvre en particulier un spectre entre 450 nm et 730 nm.

7. Phare (1) selon l'une quelconque des revendications précédentes,
**caractérisé en ce que**
la deuxième source de lumière à semi-conducteur (3) comprend une diode électroluminescente.

8. Phare (1) selon l'une quelconque des revendications précédentes,
**caractérisé en ce que**
un élément de collimation optique respectif (9, 10) est agencé entre la première surface de couplage (5) et l'élément de conversion (8) et/ou entre la deuxième surface de couplage (6) et la deuxième source de lumière à semi-conducteur (3) pour la collimation des rayonnements générés respectifs avant leur couplage dans le dispositif de couplage (4).

9. Véhicule automobile avec un phare (1) selon l'une quelconque des revendications précédentes.
